# EUROPEAN PATENT SPECIFICATION

(11) **EP 0 497 763 B1**
(45) Date of publication and mention of the grant of the patent: **15.03.1995**
(21) Application number: 90905605.3
(22) Date of filing: 05.04.1990
(51) Int. Cl.: G09G 3/02

(54) **LASER-WRITTEN MOVING IMAGE DISPLAY APPARATUS**
LASERGESCHRIEBENES ANZEIGEGERÄT FÜR BEWEGENDE BILDER
APPAREIL D'AFFICHAGE D'IMAGES EN MOUVEMENT A ECRITURE LASER

(30) Priority: 07.04.1989 GB 8907820
(43) Date of publication of application: 12.08.1992
(73) Proprietor: AUBUSSON, Russell Croston, Wirral, Merseyside L61 2XW (GB)
(72) Inventor: AUBUSSON, Russell Croston, Wirral, Merseyside L61 2XW (GB)
(74) Representative: Wells, Keith Raymond
(86) International application number: GB9000516
(87) International publication number: WO9012387

(56) References cited:
- GB-A- 2 118 803
- EDN, vol. 15, no. 2, 15 January 1970, (Newton, Mass., US), "Design News", pages 22-23
- IEEE Spectrum, vol. 5, no. 12, December 1968 (New York, US), C.E. Baker: "Laser display technology", pages 39-50
- Patent Abstracts of Japan, vol. 10, no. 269 (C-372), 12 September 1986 & JP-A-61091281
- Patent Abstracts of Japan, vol. 7, no. 17, (E-154), 22 January 1983 & JP-A-57174832

## Description

### FIELD OF THE INVENTION

The present invention relates to an apparatus for displaying monochromatic or coloured moving images. More particularly, the present invention relates to an apparatus for displaying images in which a laser is used to illuminate phosphorised panels.

### BACKGROUND OF THE INVENTION AND PRIOR ART DISCUSSION

Apparatuses are known for displaying moving images. Thus, it is known to form images by projecting light through a photographic film onto a reflective screen. Alternatively, back-projection onto a translucent screen may be employed. In conventional television sets, the images are formed by the controlled illumination of the phosphorised inner surface of a cathode ray tube. None of these techniques are well-suited to display moving pictures on large screens outdoors.

To overcome this disadvantage, a known apparatus comprises a plurality of large panels, each of which has a large number of individually illuminable light sources. The light sources provide controlled intensity in each of the three primary colours and are suitably arranged to give an acceptable definition of the image at a predetermined distance of observation. Such a known apparatus necessitates the use of a large number of separately addressable light sources with inherent high manufacturing and maintenance costs.

In British Patent Specification No. 2118803, there is described and claimed an image display device. Such device comprises a light source capable of producing and deflecting a beam. Such beam may be of visible light but is preferably ultra-violet radiation. The device further includes an image intensifier which receives, intensifies and displays the output of the source and which has a screen with red, green and blue light emitter areas arranged side-by-side thereon. Control means are provided for applying, to the source signal, components representing the appropriate colours as the beam is directed to the respective light emitter areas.

This prior document specifically states that the function of the addressing of the light sources and providing energy for illumination are separated. A laser is used for supplying the signal for addressing and controlling the main source of illumination which latter is the image intensifier. The use of an image intensifier has two major inherent disadvantages firstly, such intensifiers are expensive to produce and are vulnerable to exposure to the elements. Secondly,there is a need to protect the image intensifier from spurious triggering by ambient light. To overcome this latter problem, the ultra-violet laser beam is radio-frequency modulated.

### OBJECTS OF THE INVENTION

The present invention seeks to provide an image display apparatus in which the disadvantages of known apparatuses are overcome or,at least, minimized. More specifically, the present invention seeks to provide an apparatus in which the need for utilising an image intensifier is obviated. Furthermore, the present invention seeks to provide an apparatus in which visible light is created by fluorescence.

### SUMMARY OF THE INVENTION

According to the present invention, there is provided a laser-written moving image display apparatus comprising a source capable of producing an ultra-violet laser beam, a screen comprising an aligned arrangement of first, second and third types of phosphors, said first type of phosphor fluorescing so as to emit visible red light when impinged upon directly by said laser beam, said second type of phosphor fluorescing so as to emit visible green light when impinged upon directly by said laser beam and said third type of phosphor fluorescing so as to emit visible blue light when impinged on directly by said laser beam, deflector means for deflecting said laser beam so as to cause said beam to scan said screen and control means for controlling the intensity of the laser beam and for synchronising signals transmitted to said laser and to said deflection means whereby said laser simultaneously addresses said phosphors and provides the energy for illumination.

### BRIEF DESCRIPTION OF THE DRAWINGS

The present invention will be further described, by way of example, with reference to the accompanying drawings, in which: -
Fig. 1 is a schematic illustration of an image-forming apparatus in accordance with the present invention; and
Fig. 2 shows a block diagram of the apparatus shown in Fig. 1 and of a control mechanism for controlling the apparatus.

### DESCRIPTION OF PREFERRED EMBODIMENTS

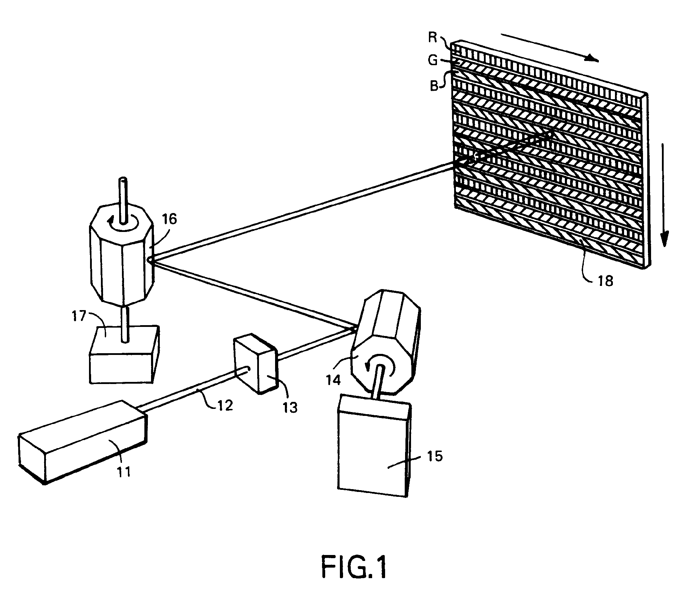

In Fig. 1, there is shown an image-forming apparatus in accordance with the present invention. Such apparatus comprises a laser 11 which produces a beam 12 of ultra-violet radiation. The beam 12 then passes through a distortion compensation device 13 which, in this embodiment, is in the form of an acousto-optic deflector. Such deflector compensates for beam distortion produced by beam reflector devices to be described in greater detail hereinafter.

After passing through the distortion compensation device 13, the beam impinges upon a first reflector device 14 which is in the form of a mirror having a plurality of facets. In the embodiment shown, the mirror is rotatably mounted about a horizontal axis; the drive means for producing such rotation being in the form of an electric motor 15. The reflected beam then impinges upon a second reflector device 16 which, again, is in the form of a mirror having a plurality of facets. The mirror 16 is mounted for rotation about a vertical axis and is driven by an electric motor 17. Reflection of the beam by the mirror 16 directs the beam onto a display screen 18.

The screen 18 is provided with suitably disposed arrays of three different phosphors which, when illuminated by the ultra-violet laser beam, emit visible red, visible green and visible blue light. In the embodiment shown, the phosphors are arranged in horizontal lines with the minimum practicable spacing between the lines with the sequence of lines being red (R), green (G), blue (B), red, green, blue and so on from top to bottom of the screen. Six hundred and twenty-five lines of each of three phosphors are provided. For the sake of clarity, only a small number of these lines are shown in Fig. 1.

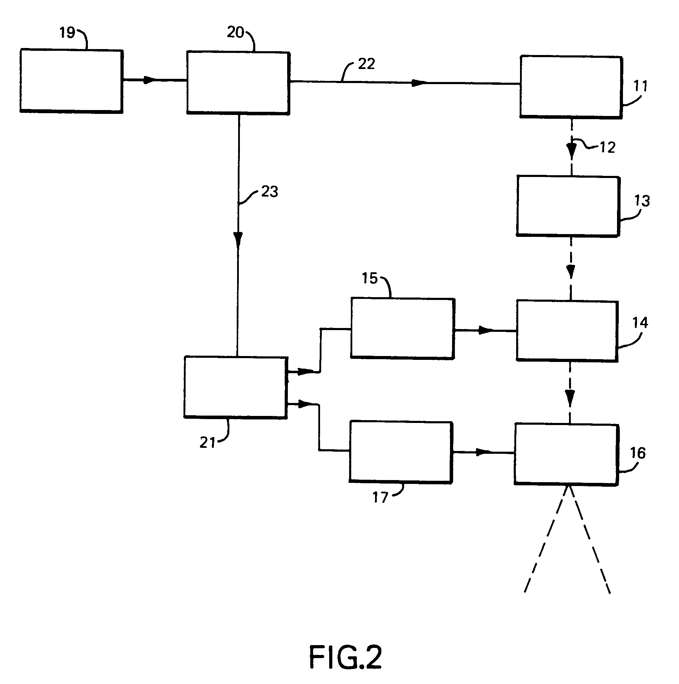

The method of operation of the apparatus will now be described with reference to the block diagram shown in Fig. 2. Initially, the data relating to a. single frame is extracted from a frame store 19 and is processed in a signal generator 20. This latter produces a voltage-modulated signal 22 which controls the intensity of the ultra-violet radiation emitted by the laser 11. Moreover, the signal generator also produces synchronising signals 23 which are fed to a controller 21. This controller 21 transmits signals to the motors 15 and 17 to rotate the mirrors 14 and 16. The rotation of the mirrors causes the laser beam, which has already been deflected by the acousto-optic deflector 13 to compensate for distortion produced by the mirrors 14 and 16 to impinge on the desired area of the screen such that a true image of the original single picture frame is displayed.

As the mirror 16 rotates in the direction of the arrow shown in Fig. 1, the laser beam sweeps a path from left to right across the screen. In the position shown in Fig. 1, the laser is sweeping across a line of phosphors which fluoresce and emit blue light when impinged upon by the laser. The intensity and brightness of the blue coloration is, of course, dependent upon the intensity and brightness of the coloration in the original frame. When the beam has reached the end of one line of phosphors, a new line scan is commenced. At such time, the next facet of the mirror 16 is directing the laser beam onto the left-hand end of the new line. The appropriate line intensity modulation signal is fed to the laser beam so that the power of the beam and the fluorescent light emitted by the phosphor, which will now be red, vary across the line in accordance with the original frame. In the next line, the fluorescent light emitted by the phosphor is green. The line scanning is continued until all 1875 lines (625 of each colour) have been scanned. The horizontally mounted mirror 14 continues to rotate and, after a short period of time of the order of five milliseconds, the adjacent facet of the mirror is in the correct position to cause the beam to scan the top line in accordance with the next frame.

Various components of the apparatus will now be described in greater detail. Thus, the mirror surfaces must be highly reflective to ultra-violet radiation at the wavelength emitted by the laser. This is necessary to maximise the efficiency of the use of the output of the laser and also to avoid unwanted heating of the mirror. Such heating will, of course, occur if an appreciable portion of the power of the beam passes through the reflective layer and is absorbed by the mirror. Thus, it has been found that if aluminium is vacuum-deposited, in the form of an opaque layer, on polished glass, the reflectivity is of the order of 90% in the range of 300 to 400 nm and is still of the order of 85% at 200 nm. At 400 nm,silver has a reflectivity of 93% but this figure is appreciably lower at shorter wavelengths.

The bodies of the mirrors may be made of glass or any other material which is sufficiently rigid to withstand high rotational speeds, can be worked to provide precise surface geometry and to which a suitable reflective layer can be adhered. Although aluminium is difficult to polish, it can provide very precise surface geometry and is therefore suitable for use. To prevent tarnishing and to optimise reflectivity, the aluminium is surface-coated with a dielectric of suitable thickness and refractive index for the laser wavelength being used.

As stated hereinbefore, each mirror has a plurality of facets. The maximum and optimum number of facets depend on a number of factors, such as the spacing of the screen from the mirror and the dimensions of the screen. By way of example only,it is pointed out that a 5° deflection between the extreme left-and right-hand edges of the screen would permit a maximum of 144 facets to be employed on the mirror 16. Whilst is is advantageous to use as many facets as possible because this reduces the required rate of rotation of the mirror, it is, in practice, not desirable so to do. By reducing the number of facets, it is not necessary to use the extreme edges of each facet and allowances are made for minor inaccuracies in the synchronisation of the mirror position with the laser power modulation. Thus, if it is desired to illuminate 625 lines of each of the three different phosphors 25 times per second, a mirror having 100 facets would need to be rotated at a speed of 468.75 revolutions per second. It should, perhaps, be pointed out that only eight facets are shown on the mirror 16 in Fig. 1 purely for the sake of clarity. The mirror 14, which also has only eight facets shown for the sake of clarity, is rotated at a much lower speed. Thus, only twenty-five facets need to be presented each second to construct the twenty-five individual three-colour frames to be displayed each second. The presentation of twenty-five or more frames per second is highly desirable to prevent flicker.

Depending upon the geometry and position of the mirrors, crossed axis mirrors tend to produce distortion in the image produced. In order to compensate for such distortion, and thereby to ensure that the laser beam accurately scans along each line of phosphors, an acousto-optic deflector 13 is provided. The material used as the deflector depends upon the nature of the laser and the desired efficiency of the deflector. At wavelengths of approximately 360 nm and above, deflectors based on Tellurium oxide crystals are highly efficient. At shorter wavelengths, quartz crystals may be employed but these are less efficient.

If the distortion produced is calculated to be insufficient to cause the laser to become out of alignment with the phosphors, the deflector 13 could be omitted and the position of the mirrors 14 and 16 in the beam path reversed. Similarly, it would be theoretically possible to eliminate distortion without the use of the deflector 13 simply by adjusting the rotational speeds of the mirrors. However, it is believed that this would be difficult to achieve in practice.

It is also theoretically possible to dispense with the mirror 14 in two different ways. Firstly, the mirror 16 could be mounted, together with its motor 17, in gimbal bearings which permit the mirror to be deflected about a horizontal axis which is orthogonal to the line of projection of the beam from the mirror to the screen. However, this would entail the use of complex and heavy-duty bearings which could, in extreme circumstances, cause distortion of the mirror itself. Secondly, the mirror 16 could be provided with angled facets, that is to say, facets cut at small incremental angles to the axis of the mirror. Whilst such an arrangement will produce, without significant distortion, the incremental deflections necessary to produce consecutive lines of each frame, the practical limit for the number of facets is of the order of one hundred. It would therefore appear necessary for the beam to be split in order for, say, ten complete revolutions of the mirror to produce one complete frame.

It has surprisingly been found that the phosphors used in conventional colour television sets are suitable for use in the present invention. Thus, the phosphor used to produce red light is Yttrium Oxysulphide plus Europium and Terbium (Y₂O₂S:Eu:Tb), that to produce blue light is Zinc Sulphide plus Silver (ZnS:Ag) and that to produce green light is Zinc Cadmium Sulphide plus Copper [(Zn, Cd)S: Cu]. Of these, the "red" phosphor is a "Characteristic Phosphor", that is to say, the energy level changes are those of the activator whilst the "green" and "blue" phosphors are "Non-Characteristic Phosphors" which means that the energy level changes arise from the impurity-induced lattice modification. It is surprising that the phosphors work in the present invention because, in a television set, they are bombarded with electrons whilst, in the present invention, they are scanned by an ultra-violet laser beam. It could not be predicted that the different types of irradiation will necessarily produce the same effect. Compensation can be made for any colour imbalance by appropriate modulation of the laser beam so that the beam intensity thereof is reduced when the appropriate lines of phosphors are being scanned.

The laser 11 may be of any suitable type which produces a narrow beam of ultra-violet radiation. The presently preferred laser is an Argon Ion Laser which is of the continuous wave type. A known laser of this type is a 7-watt continuous wave laser. However, depending upon the particular circumstances, other lasers such as Excimer lasers could possibly be used. Furthermore, techniques such as frequency multiplication could be employed.

## Claims

1. A laser-written moving image display apparatus comprising a source (11) capable of producing an ultra-violet laser beam, a screen (18) comprising an aligned arrangement of first, second and third types of phosphors (R,G,B), said first type of phosphor fluorescing so as to emit visible red light when impinged upon directly by said laser beam, said second type of phosphor fluorescing so as to emit visible green light when impinged upon directly by said laser beam and said third type of phosphor fluorescing so as to emit visible blue light when impinged on directly by said laser beam, deflector means (14,16) for deflecting said laser beam so as to cause said beam to scan said screen and control means (13) for controlling the intensity of the laser beam and for synchronising signals transmitted to said laser and to said deflection means whereby said laser simultaneously addresses said phosphors and provides the energy for illumination.

2. An apparatus as claimed in claim 1 wherein said source is a continuous wave ultra-violet laser.

3. An apparatus as claimed in claim 2 wherein said source is an argon ion laser.

4. An apparatus as claimed in claim 1 wherein said source is a visible-light laser subjected to frequency multiplication to produce an ultra-violet laser beam.

5. An apparatus as claimed in any one of claims 1 to 4 wherein said first, second and third types of phosphors are arranged in horizontal rows or vertical columns, each said row or column being either continuous or discontinuous.

6. An apparatus as claimed in any preceding claim wherein said first type of phosphors are all yttrium oxysulphide-europium-terbium (Y₂O₂S:Eu:Tb) phosphors.

7. An apparatus as claimed in any preceding claim wherein said second type of phosphors are all zinc cadmium sulphide-copper [(Zn Cd)S:Cu] phosphors.

8. An apparatus as claimed in any preceding claim wherein said third type of phosphors are all zinc sulphide-silver (ZnS:Ag) phosphors.

9. An apparatus as claimed in any preceding claim wherein the deflector means comprise at least one mirror having a plurality of facets on its reflective surface and lying in the beam path between said source and said screen, each said mirror being mounted for rotation and drive means for rotating each said mirror.

10. An apparatus as claimed in claim 9 wherein a single mirror is provided, said mirror having facets cut at small incremental angles to the axis of the mirror.

11. An apparatus as claimed in claim 9 wherein a single mirror is provided, said mirror having a plurality of facets cut parallel to the axis of the mirror, the mirror being mounted in gimbal bearings.

12. An apparatus as claimed in claim 9 wherein two mirrors, each having a plurality of facets cut parallel to the axis of the mirror, are employed, the axes of the two mirrors extending at right angles to one another.

13. An apparatus as claimed in any one of claims 9 to 12 additionally comprising an acoustic-optic deflector disposed in the beam path, the deflector being based on a tellurium oxide crystal.

14. An apparatus as claimed in any one of claims 9 to 13 wherein said control means comprises a signal generator receiving data from a frame store, said generator producing a voltage-modulated signal controlling the intensity of the laser beam and synchronising signals fed to a control device to cause said device to act on said drive means for each said mirror.

## Patentansprüche

1. Lasergeschriebene Anzeige-Vorrichtung für bewegte Bilder, umfassend eine Quelle (11), die in der Lage ist, einen ultravioletten Laserstrahl zu erzeugen, einen Bildschirm (18), der eine ausgerichtete Anordnung von ersten, zweiten und dritten Leuchtstofftypen (R, G, B) umfaßt, wobei der erste Leuchtstofftyp so fluoresziert, daß er sichtbares rotes Licht emittiert, wenn der Laserstrahl direkt auf ihn auftrifft, der zweite Leuchtstofftyp so fluoresziert, daß er sichtbares grünes Licht emittiert, wenn der Laserstrahl direkt auf ihn auftrifft, und der dritte Leuchtstofftyp so fluoresziert, daß er sichtbares blaues Licht emittiert, wenn der Laserstrahl direkt auf ihn auftrifft, Ablenkvorrichtungen (14, 16) zum Ablenken des Laserstrahls, so daß der Strahl den Bildschirm abtastet, und eine Steuerungsvorrichtung (13) zum Steuern der Intensität des Laserstrahls und zum Synchronisieren von Signalen, die auf den Laser und die Ablenkvorrichtung übertragen werden, wobei der Laser die Leuchtstoffe simultan anspricht und die Energie für das Leuchten bereitstellt.

2. Vorrichtung nach Anspruch 1, wobei die Quelle ein ultravioletter CW-Laser ist.

3. Vorrichtung nach Anspruch 2, wobei die Quelle ein Argonionenlaser ist.

4. Vorrichtung nach Anspruch 1, wobei die Quelle ein Laser mit sichtbarem Licht ist, der einer Frequenzmultiplikation unterzogen wird, um einen ultravioletten Laserstrahl zu erzeugen.

5. Vorrichtung nach einem der Ansprüche 1 bis 4, wobei die ersten, zweiten und dritten Leuchtstofftypen in horizontalen Reihen oder in vertikalen Spalten angeordnet sind, wobei jede dieser Reihen oder Spalten entweder kontinuierlich oder diskontinuierlich ist.

6. Vorrichtung nach einem der vorhergehenden Ansprüche, wobei die ersten Leuchtstofftypen sämtlich Yttriumoxysulfid-Europium-Terbium-(Y₂O₂S:Eu:Tb)-Leuchtstoffe sind.

7. Vorrichtung nach einem der vorhergehenden Ansprüche, wobei die zweiten Leuchtstofftypen sämtlich Zinkcadmiumsulfid-Kupfer-[(Zn Cd)S:Cu]-Leuchtstoffe sind.

8. Vorrichtung nach einem der vorhergehenden Ansprüche, wobei die dritten Leuchtstofftypen sämtlich Zinksulfid-Silber-(ZnS:Ag)-Leuchtstoffe sind.

9. Vorrichtung nach einem der vorhergehenden Ansprüche, wobei die Ablenkvorrichtung mindestens einen Spiegel umfaßt, der eine Mehrzahl von Facetten auf seiner reflektierenden Oberfläche aufweist und in dem Strahlenweg zwischen der Quelle und dem Bildschirm liegt, wobei jeder dieser Spiegel drehbar angebracht ist, und Antriebsvorrichtungen zum Drehen eines jeden dieser Spiegel umfaßt.

10. Vorrichtung nach Anspruch 9, wobei ein einziger Spiegel vorgesehen ist, der in kleinen inkrementalen Winkeln zur Spiegelachse geschnittene Facetten aufweist.

11. Vorrichtung nach Anspruch 9, wobei ein einziger Spiegel bereitgestellt wird, der eine Mehrzahl von Facetten aufweist, die parallel zur Spiegelachse geschnitten sind, wobei der Spiegel in einem Kardanlager aufgehängt ist.

12. Vorrichtung nach Anspruch 9, wobei zwei Spiegel, von denen jeder eine Mehrzahl von Facetten aufweist, die parallel zur Spiegelachse geschnitten sind, verwendet werden, wobei die Achsen der beiden Spiegel im rechten Winkel zueinander stehen.

13. Vorrichtung nach einem der Ansprüche 9 bis 12, darüber hinaus umfassend einen akusto-optischen Deflektor, der in dem Strahlenweg angebracht ist, wobei der Deflektor ein Deflektor auf Telluroxidkristall-Basis ist.

14. Vorrichtung nach einem der Ansprüche 9 bis 13, wobei die Steuerungsvorrichtung einen Signalgenerator umfaßt, der Daten von einem Vollbildspeicher erhält, wobei der Generator ein spannungsmoduliertes Signal erzeugt, das die Intensität des Laserstrahls steuert und Signale synchronisiert, die einer Kontrollvorrichtung zugeführt werden, damit die Vorrichtung auf die Antriebsvorrichtungen für jeden dieser Spiegel wirkt.

## Revendications

1. Dispositif d'affichage d'images en déplacement tracées à l'aide d'un laser comprenant une source (11) capable de produire un faisceau laser ultra-violet, un écran (18) comprenant un réseau aligné de premier, second et troisième types de luminophores (R, G, B), ledit premier type de luminophores étant fluorescent afin d'émettre de la lumière rouge visible lorsqu'il est frappé directement par ledit faisceau laser, ledit second type de luminophores étant fluorescent afin d'émettre de la lumière verte visible lorsqu'il est frappé directement par ledit faisceau laser et ledit troisième type de luminophores étant fluorescent afin d'émettre de la lumière bleue visible lorsqu'il est frappé directement par ledit faisceau laser, des moyens déflecteurs (14, 16) pour dévier ledit faisceau laser afin d'amener ledit faisceau à balayer ledit écran et, des moyens de commande (13) pour commander l'intensité du faisceau laser et pour synchroniser des signaux transmis au dit laser et aux dits moyens déflecteurs afin que ledit laser adresse simultanément lesdits luminophores et fournisse l'énergie pour l'illumination.

2. Dispositif selon la revendication 1 dans lequel ladite source est un laser ultra-violet à onde continue.

3. Dispositif selon la revendication 2 dans lequel ladite source est un laser à ion argon.

4. Dispositif selon la revendication 1 dans lequel ladite source est un laser à lumière visible soumis à une multiplication de fréquence afin de produire un faisceau laser ultra-violet.

5. Dispositif selon l'une quelconque des revendications 1 à 4 dans lequel lesdits premier, second et troisième types de luminophores sont disposés en rangées horizontales ou en colonnes verticales, chaque rangée ou colonne étant soit continue soit discontinue.

6. Dispositif selon l'une quelconque des revendications précédentes dans lequel les luminophores dudit premier type de luminophores sont tous des luminophores oxysulfure d'yttrium-europium-terbium (Y₂O₂S:Eu:Tb).

7. Dispositif selon l'une quelconque des revendications précédentes dans lequel les luminophores du second type de luminophores sont tous des luminophores sulfure de zinc cadmium-cuivre [(Zn Cd)S:Cu].

8. Dispositif selon l'une quelconque des revendications précédentes dans lequel les luminophores du troisième type de luminophores sont tous des luminophores sulfure de zinc-argent (ZnS:Ag).

9. Dispositif selon l'une quelconque des revendications précédentes dans lequel les moyens déflecteurs comprennent au moins un miroir comportant une pluralité de facettes sur sa surface réfléchissante et qui est situé dans la trajectoire de faisceau entre ladite source et ledit écran, chacun desdits miroirs étant montés à rotation, et des moyens d'entraînement pour la rotation de chacun desdits miroirs.

10. Dispositif selon la revendication 9 dans lequel on prévoit un miroir unique, ledit miroir comportant des facettes découpées selon des angles à faible incrément par rapport à l'axe du miroir.

11. Dispositif selon la revendication 9 dans lequel on prévoit un miroir unique, ledit miroir ayant une pluralité de facettes découpées parallèlement à l'axe du miroir, le miroir étant monté dans une suspension à cardan.

12. Dispositif selon la revendication 9 dans lequel on utilise deux miroirs comportant chacun une pluralité de facettes découpées parallèlement à l'axe du miroir, les axes des deux miroirs s'étendant à angle droit l'un par rapport à l'autre.

13. Dispositif selon l'une quelconque des revendications 9 à 12 comprenant en outre un déflecteur opto-acoustique disposé dans la trajectoire du faisceau, le déflecteur étant à base d'un cristal d'oxyde de tellurium.

14. Dispositif selon l'une quelconque des revendications 9 à 13, dans lequel lesdits moyens de commande comprennent un générateur de signaux recevant des données d'une mémoire d'unités d'information, ledit générateur produisant un signal modulé en tension commandant l'intensité du faisceau laser et synchronisant des signaux délivrés à un dispositif de commande pour amener ce dispositif à agir sur lesdits moyens d'entraînement de chacun desdits miroirs.
